# EUROPEAN PATENT APPLICATION

(11) **EP 2 661 111 A1**
(43) Date of publication of application: **06.11.2013**
(21) Application number: 11854029.3
(22) Date of filing: 09.12.2011
(51) Int. Cl.: H04W 12/06, H04W 84/10

(54) **MONITORING DEVICE, AND INSTALLATION POSITION MANAGEMENT METHOD FOR SMALL-SIZED BASE STATION**

(30) Priority: 28.12.2010 JP 2010292728
(71) Applicant: Panasonic Corporation, Osaka 571-8501 (JP)
(72) Inventor: KOIDE, Yasuo, Osaka 540-6207 (JP); LI, Jifeng, Osaka 540-6207 (JP); NANRI, Masahiko, Osaka 540-6207 (JP)
(74) Representative: Grünecker, Kinkeldey, Stockmair & Schwanhäusser
(86) International application number: PCT/JP2011/006889
(87) International publication number: WO 2012/090403

(57) **Abstract**

A monitoring device (200) manages the installation position of a moveable small-sized base station (100). A message analysis unit (202) acquires, from the small-sized base station (100) being managed, peripheral cell information which shows small-sized base stations present in the periphery of the small-sized base station (100) being managed. A database management unit (204) divides map information into a plurality of areas, and stores database information which has established whether or not each of the small-sized base stations (100) can be installed in each area. A service continuation determination unit (205) permits the installation of the small-sized base station (100) being managed, if the installation position for the small-sized base station (100) being managed, as determined from the acquired peripheral cell information, is an area wherein the installation of the small-sized base station (100) being managed is permitted, as established in the database information.

## Description

### Technical Field

The present invention relates to a monitoring apparatus and an installation location management method for small cell base stations (hereinafter called small cells), and, more particularly, to a monitoring apparatus and an installation location management method for small cells that restrict installation locations of mobile small cells.

### Background Art

In recent years, consideration has been given to installing small cells (HeNBs) in homes, offices, shopping malls, and/or the like, as a dead zone countermeasure, or for high-speed communications. The term "small cells" as used above refers to femtocells, Home eNode Bs, and/or the like. Standardization efforts regarding small cells are being made by 3GPP.

Since such small cells are mobile and are installed by users, they could interfere with other communications. Accordingly, one practice in recent years has been to set restrictions regarding installation locations for small cells in order to prevent them from interfering with other communications (e.g., Non-Patent Literature 1).

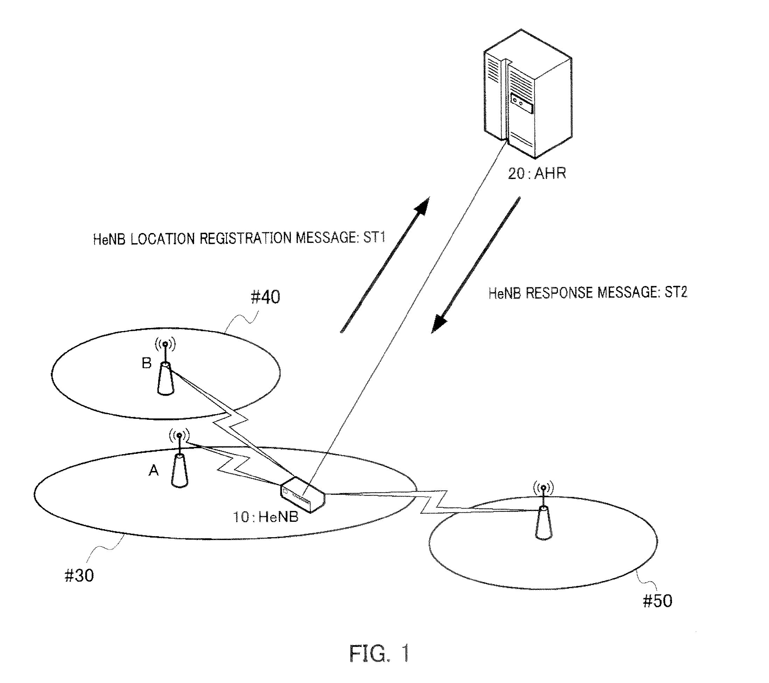

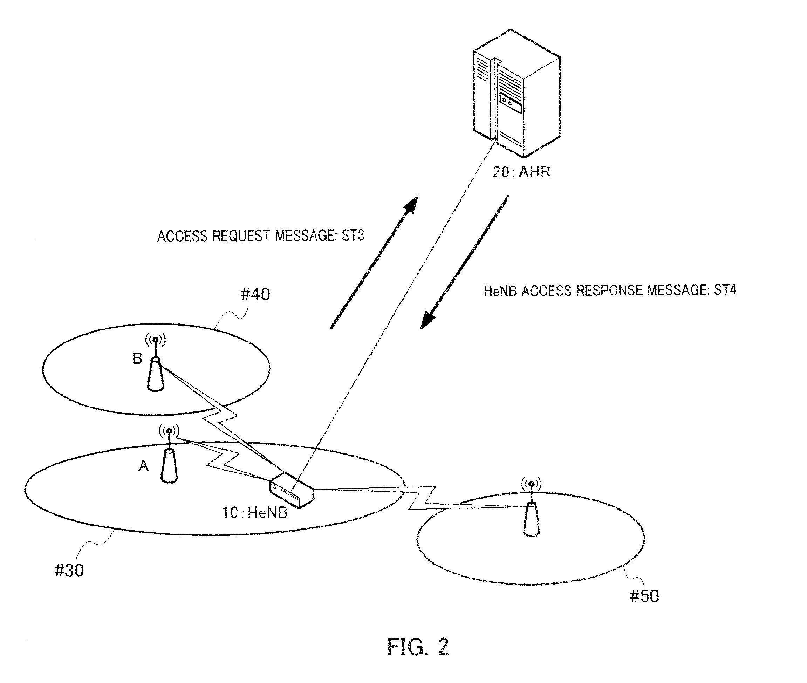

A method of setting restrictions on installation locations for small cells will now be described using FIG. 1 and FIG. 2. FIG. 1 is a diagram showing a conventional registration process where restrictions are placed on installation locations for small cells. FIG. 2 is a diagram showing a conventional authentication process where restrictions are placed on installation locations for small cells. In FIG. 1 and FIG. 2, as well as in the descriptions thereof, small cells are referred to as HeNBs.

First, a registration process is described using FIG. 1.

First, once it is powered on, HeNB 10 collects neighboring cell information indicating neighboring macro cells #30, #40, and #50. Neighboring cell information may be, for example, cell IDs for identifying macro cells #30, #40, and #50.

Next, by means of an HeNB location registration message, HeNB 10 sends the collected neighboring cell information to AHR 20 (step ST1).

Next, AHR 20 registers, as location information of HeNB 10, the neighboring cell information that has been sent by means of the HeNB location registration message.

Next, if location information registration is completed, AHR 20 sends an HeNB response message to HeNB 10 (step ST2). The registration process is thus concluded.

Next, an authentication process is described using FIG. 2. An authentication process is performed after the above-described registration process.

First, at a predetermined point in time, HeNB 10 collects neighboring cell information indicating neighboring macro cells #30, #40, and #50.

Next, by means of an access request message, HeNB 10 sends the collected neighboring cell information to AHR 20 (step ST3).

Next, AHR 20 compares the neighboring cell information, as location information and as sent by means of the access request message, with the location information of HeNB 10 registered through the registration process in FIG. 1, and determines whether or not HeNB 10 is to be permitted connection to the network. Specifically, if the neighboring cell information, as location information and as sent by means of the access request message, matches the registered location information of HeNB 10, AHR 20 makes a determination to permit network connection. On the other hand, if the neighboring cell information, as location information and as sent by means of the access request message, does not match the registered location information of HeNB 10, AHR 20 makes a determination not to permit network connection.

Next, if a determination has been made to permit network connection, AHR 20 sends an access response message to HeNB 10 (step ST4). The authentication process is thus concluded.

### Citation List

### Non-Patent Literature

NPL 1
   TR 33.820 v8.3.0 ch 7.8

### Summary of Invention

### Technical Problem

However, conventional methods determine whether or not to permit installation of a small cell using the initially registered location information of the small cell. Thus, there is a problem in that, if, for example, a macro cell is added at a location where it is possible to install a small cell, a small cell would not be granted permission for installation even if it sends neighboring cell information of the added macro cell to the AHR. Consequently, there is a problem in that the operator is unable to flexibly control installation locations of small cells. In addition, in connection with the inability to flexibly control installation locations of small cells, there is a problem with conventional methods in that in the above-mentioned case where a macro cell is added, a small cell is unable obtain permission to connect to the network, and would thus suspend service.

An object of the present invention is to provide a monitoring apparatus and an installation location management method for small cells that enable flexible control over installation locations of small cells, as well as prevent service suspension.

### Solution to Problem

A monitoring apparatus of the present invention includes a monitoring apparatus that manages an installation location of a mobile small cell base station, the monitoring apparatus including: an acquisition section that acquires neighboring cell information from a small cell base station subject to management, the neighboring cell information indicating small cell base stations located in proximity to the small cell base station subject to management; a storage section that stores database information in which map information is divided into a plurality of areas, and in which whether or not installation is permitted for each small cell base station is identified for each area; and a permission section that grants permission for installation with respect to the small cell base station subject to management if an installation location of the small cell base station subject to management as determined based on the neighboring cell information acquired by the acquisition section is in the area where installation is permitted as identified in the database information with respect to the small cell base station subject to management.

A small cell installation location management method of the present invention includes a small cell installation location management method for a monitoring apparatus that manages installation locations of mobile small cell base stations, the small cell installation location management method including: acquiring neighboring cell information from a small cell base station subject to management, the neighboring cell information indicating small cell base stations located in proximity to the small cell base station subject to management; storing database information in which map information is divided into a plurality of areas, and in which whether or not installation is permitted for each small cell base station is identified for each area; and granting permission for installation with respect to the small cell base station subject to management if an installation location of the small cell base station subject to management as determined based on the acquired neighboring cell information is in the area where installation is permitted as identified in the database information with respect to the small cell base station subject to management.

### Advantageous Effects of Invention

With the present invention, it is possible to flexibly control restrictions on small cell installation locations, as well as to prevent service suspension.

### Brief Description of Drawings

FIG. 1 is a diagram showing a conventional registration process where restrictions are placed on installation locations for small cells;
FIG. 2 is a diagram showing a conventional authentication process where restrictions are placed on installation locations for small cells;
FIG. 3 is a block diagram showing a configuration of a small cell with respect to an embodiment of the present invention;
FIG. 4 is a block diagram showing a configuration of a monitoring apparatus according to an embodiment of the present invention;
FIG. 5 is a flowchart showing operations of a small cell and a monitoring apparatus with respect to an embodiment of the present invention;
FIG. 6 is a diagram showing database information with respect to an embodiment of the present invention;
FIG. 7 is a diagram showing, with respect to a method for a monitoring apparatus according to an embodiment of the present invention and of determining whether or not installation of a small cell is to be permitted, a case where installation is permitted; and
FIG. 8 is a diagram showing, with respect to a method for a monitoring apparatus according to an embodiment of the present invention and of determining whether or not installation of a small cell is to be permitted, a case where installation is not permitted.

### Description of Embodiments

Embodiments of the present invention are described in detail below with reference to the drawings.

### (Embodiment)

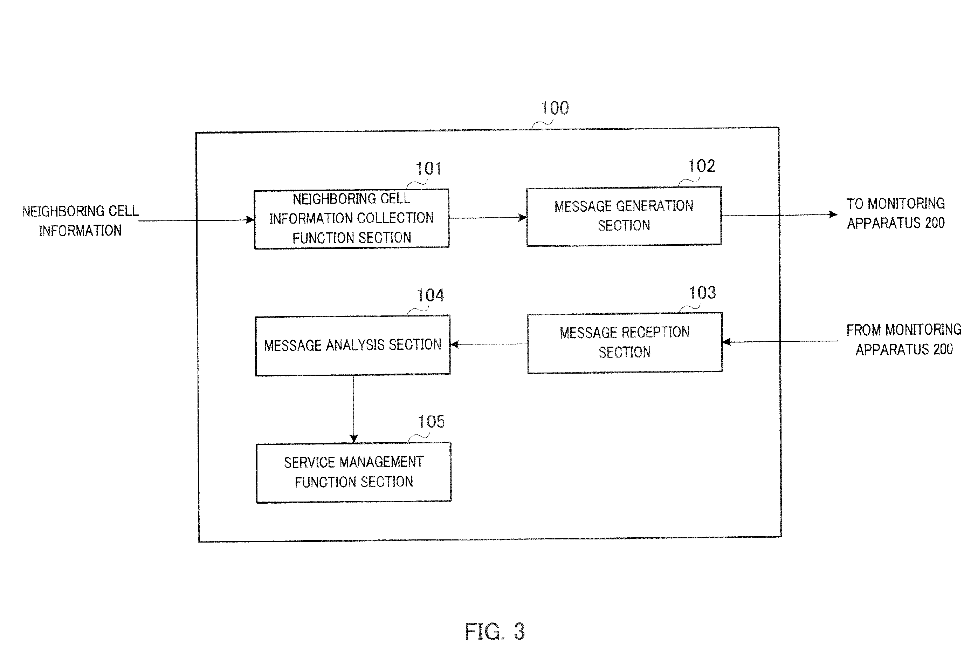

FIG. 3 is a block diagram showing a configuration of small cell 100 with respect to an embodiment of the present invention.

Small cell 100 generally includes neighboring cell information collection function section 101, message generation section 102, message reception section 103, message analysis section 104, and service management function section 105.

Through a wireless connection, neighboring cell information collection function section 101 collects neighboring cell information from unillustrated communications terminal apparatuses or neighboring small cells. Neighboring cell information collection function section 101 outputs the collected neighboring cell information to message generation section 102. The neighboring cell information above is information of small cells, other than small cell 100 subject to management, that exist in proximity to small cell 100 subject to management.

Message generation section 102 sequentially stores the neighboring cell information received from neighboring cell information collection function section 101, while also comparing the newly received neighboring cell information with previously received and stored neighboring cell information. If the comparison reveals that the newly received neighboring cell information includes changes relative to the stored neighboring cell information, message generation section 102 generates a message including the newly received neighboring cell information (i.e., an NR report message), and sends it to monitoring apparatus 200 via a wired connection.

Message reception section 103 receives, from monitoring apparatus 200 and via a wired connection, a message permitting installation (i.e., an NR report response message), and outputs it to message analysis section 104.

Message analysis section 104 analyzes the message received from message reception section 103, and outputs an analysis result to service management function section 105.

Based on the analysis result received from message analysis section 104, service management function section 105 suspends or starts the service provided by small cell 100.

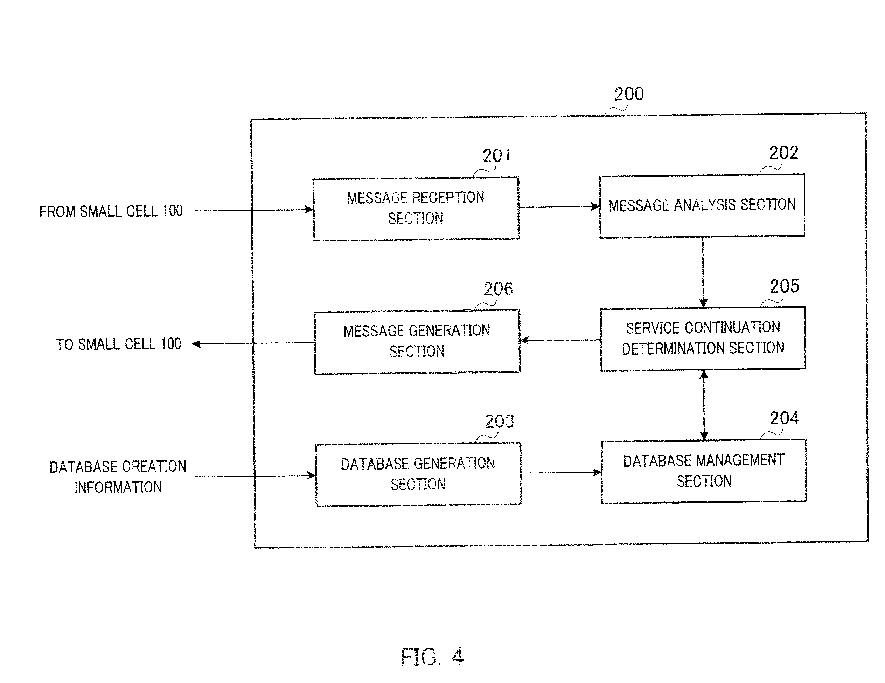

Next, a configuration of monitoring apparatus 200 is described using FIG. 4. FIG. 4 is a block diagram showing a configuration of monitoring apparatus 200. Monitoring apparatus 200 may be, for example, an operation and maintenance center (OMC).

Monitoring apparatus 200 generally includes message reception section 201, message analysis section 202, database generation section 203, database management section 204, service continuation determination section 205, and message generation section 206.

Message reception section 201 receives, from small cell 100 subject to management and via a wired connection, a message including neighboring cell information (i.e., an NR report message). Message reception section 201 outputs the received message to message analysis section 202.

Message analysis section 202 analyzes the message received from message reception section 201, and thus obtains neighboring cell information. Message analysis section 202 outputs the obtained neighboring cell information to service continuation determination section 205.

Database generation section 203 receives database creation information from outside, and generates database information using the received database creation information. Database generation section 203 generates database information each time it receives database creation information. In other words, database generation section 203 generates database information each time it receives database creation information for altering the database information in part or entirely after having generated the database information. Database generation section 203 outputs the generated database information to database management section 204.

Database management section 204 stores the database information received from database generation section 203. Details of the database information are provided hereinbelow.

In the event that neighboring cell information is received from message analysis section 202, service continuation determination section 205 obtains from database management section 204 the database information stored in database management section 204. Service continuation determination section 205 matches the obtained database information and the neighboring cell information against each other, and determines whether or not to permit installation of small cell 100 subject to management. For this determination regarding whether or not to permit installation of small cell 100 subject to management, service continuation determination section 205 may, for example, determine whether or not to continue the service by small cell 100 subject to management. Small cell 100 subject to management mentioned above is a small cell 100 that is subject to a determination by monitoring apparatus 200 regarding whether or not to permit installation. A method for determining whether or not to permit installation of small cell 100 is described hereinbelow.

If a determination is made to permit installation of small cell 100 subject to management, service continuation determination section 205 outputs the determination result to message generation section 206.

Message generation section 206 generates a message including the determination result received from service continuation determination section 205 (i.e., an NR report response message). Message generation section 206 sends the generated message to small cell 100 subject to management via a wired connection.

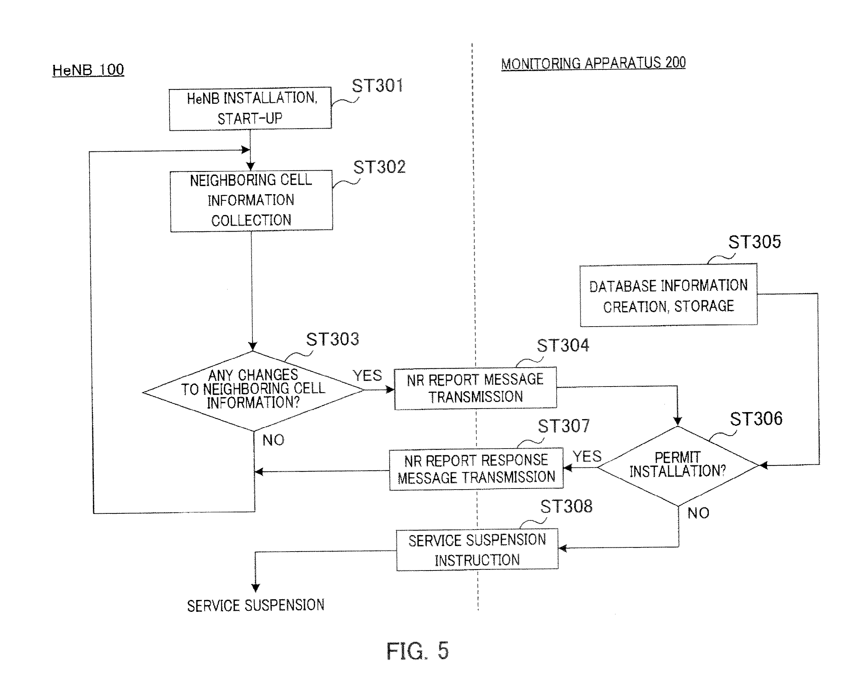

Next, operations of small cell 100 and monitoring apparatus 200 are described using FIG. 5. FIG. 5 is a flowchart showing operations of small cell 100 and monitoring apparatus 200. In FIG. 5, as well as in the descriptions thereof, small cell 100 subject to management is referred to as HeNB.

First, HeNB 100 is installed by a user, and starts up (step ST301).

Next, neighboring cell information collection function section 101 of HeNB 100 collects neighboring cell information (step ST302).

Next, message generation section 102 of HeNB 100 determines whether or not the newly received neighboring cell information includes any changes relative to the previously received and stored neighboring cell information (step ST303).

If the newly received neighboring cell information includes no changes (step ST303: No), HeNB 100 determines that there has been no movement, and returns the process to step ST302.

On the other hand, if the newly received neighboring cell information includes changes (step ST303: Yes), message generation section 102 sends to monitoring apparatus 200 a message including the neighboring cell information (i.e., an NR report message) (step ST304).

Database generation section 203 of monitoring apparatus 200 generates database information, and database management section 204 of monitoring apparatus 200 prestores the database information (step ST305).

Message reception section 201 of monitoring apparatus 200 receives the message sent by HeNB 100 in step ST304.

Message analysis section 202 of monitoring apparatus 200 obtains neighboring cell information.

Service continuation determination section 205 of monitoring apparatus 200 matches the database information stored in database management section 204 and the neighboring cell information with each other, and determines whether or not to permit installation of HeNB 100 (step ST306).

If installation is permitted (step ST306: Yes), message generation section 206 of monitoring apparatus 200 sends to HeNB 100 a message permitting installation (i.e., an NR report response message) (step ST307).

Next, message reception section 103 of HeNB 100 receives the message permitting installation (i.e., the NR report response message), and service management function section 105 of HeNB 100 continues service.

HeNB 100 thereafter repeats the processes of step ST302 and onwards.

On the other hand, if installation is not permitted (step ST306: No), monitoring apparatus 200 sends to HeNB 100 a message instructing HeNB 100 to suspend service (service suspension instruction message) (step ST308). Thus, HeNB 100 suspends service.

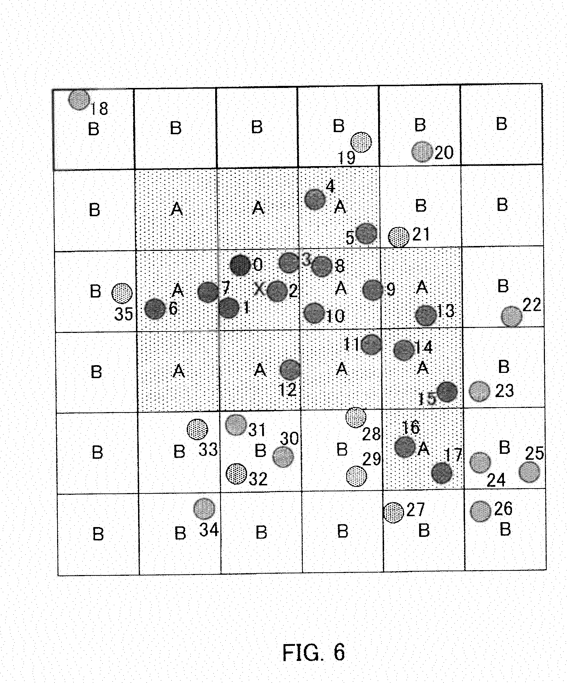

Next, database information is described using FIG. 6. FIG. 6 is a diagram showing database information.

According to FIG. 6, database information is information where map information is divided into a plurality of areas, and where, for each divisional area, it is identified whether or not installation of small cell 100 subject to management is permitted. By way of example, with respect to FIG. 6, area X is an area where small cell 100 subject to management currently belongs to, areas A are areas where installation of small cell 100 subject to management is permitted, and areas B are areas where installation of small cell 100 subject to management is not permitted.

With respect to FIG. 6, the black circles (the ●s shown in FIG. 6) mapped onto the map information indicate installation locations of small cells 100. The locations of the black circles on the map information move across the map information as the installation locations of small cells 100 change. In the case of FIG. 6, the small cell 100 at the location numbered 0 is the small cell 100 subject to management. Small cells 100 at the locations numbered 1 to 17 are small cells 100 other than small cell 100 subject to management that are installed in areas A where installation of small cell 100 subject to management is permitted. Small cells 100 at the locations numbered 18 to 35 are small cells 100 other than small cell 100 subject to management that are installed in areas B where installation of small cell 100 subject to management is not permitted.

With a determination method that uses the above-mentioned database information, if the neighboring cell information includes one small cell 100 that belongs to area A, service continuation determination section 205 determines that small cell 100 subject to management is installed in area A. Service continuation determination section 205 permits installation with respect to small cell 100 subject to management. On the other hand, if the neighboring cell information includes a plurality of small cells 100 that all belong to areas A, service continuation determination section 205 determines that small cell 100 subject to management is installed in area A. Service continuation determination section 205 permits installation with respect to small cell 100 subject to management.

On the other hand, if the neighboring cell information includes one small cell 100 that belongs to area B, service continuation determination section 205 determines that small cell 100 subject to management is installed in area B. Service continuation determination section 205 does not permit installation with respect to small cell 100 subject to management, In addition, if the neighboring cell information includes a plurality of small cells 100 that all belong to areas B, service continuation determination section 205 determines that small cell 100 subject to management is installed in area B, Service continuation determination section 205 does not permit installation with respect to small cell 100 subject to management.

If the neighboring cell information includes a plurality of small cells 100, some of which belong to areas A and the rest to areas B, service continuation determination section 205 permits installation or does not permit installation in accordance with the operator's determination.

With respect to the determination method above, the determination as to what areas the small cells 100 of the neighboring cell information belong to is carried out by comparing the neighboring cell information with the database information. Specifically, service continuation determination section 205 determines which of the installation locations (i.e., the ●s shown in FIG. 6) of small cells 100 mapped to the map information the small cells 100 of the neighboring cell information correspond to. In other words, service continuation determination section 205 determines which of the small cells numbered 1 to 35 the small cells 100 of the neighboring cell information correspond to. Service continuation determination section 205 then determines the areas to which the small cells 100 of the corresponding installation locations belong.

The database information mentioned above is generated through the method described below. Specifically, first, installation locations (the ●s shown in FIG. 6) of HeNBs 100 are mapped to the map information.

Next, the map information is divided into a plurality of grid-like areas.

Next, each area is identified as area A, where installation is permitted, or area B, where installation is not permitted. Thus, database information such as that shown in FIG. 6 is generated.

The size of areas X, A, and B may be varied in accordance with the tolerable movement range for small cells 100. By way of example, the wider the permissible movement range for small cells 100, the larger each of areas X, A, and B may be made. Area X, areas A, and areas B need not all be the same size, and their sizes may be varied.

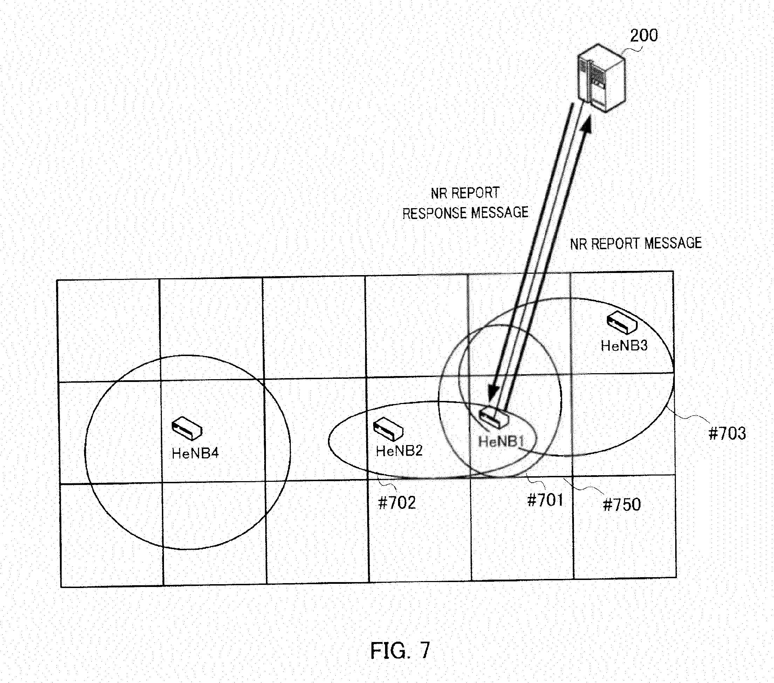

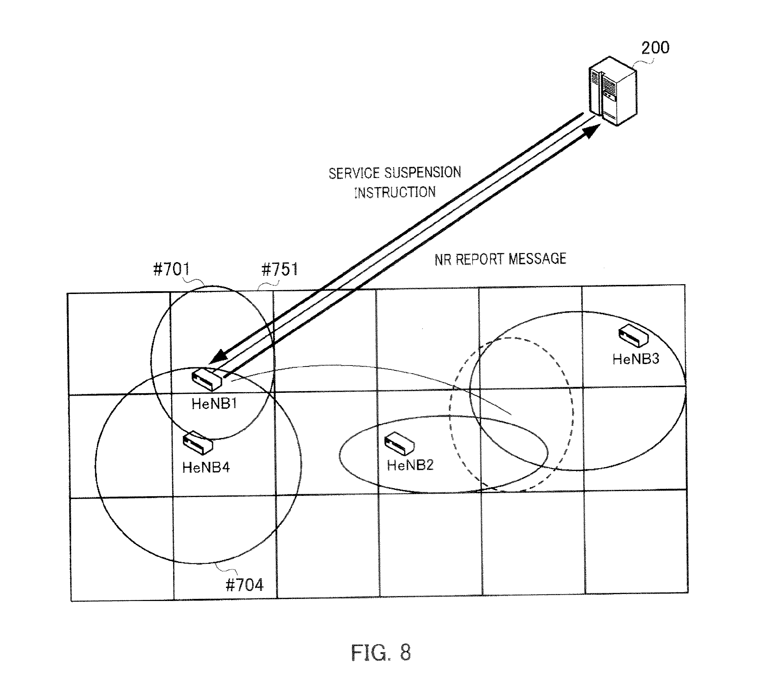

Next, using FIG. 7 and FIG. 8, a description is provided with respect to a method for monitoring apparatus 200 and of determining whether or not to permit installation of small cell 100. FIG. 7 is a diagram showing, with respect to a method for monitoring apparatus 200 and of determining whether or not installation of small cell 100 is to be permitted, a case where installation is permitted. FIG. 8 is a diagram showing, with respect to a method for monitoring apparatus 200 and of determining whether or not installation of small cell 100 is to be permitted, a case where installation is not permitted. With respect to FIG. 7 and FIG. 8, HeNBs 1, 2, 3, and 4 are small cells 100 having the same configuration as that in FIG. 3.

First, a case where installation is permitted is described using FIG. 7.

According to FIG. 7, upon being newly installed in area A #750 where installation is permitted, HeNB 1 collects, at neighboring cell information collection function section 101, neighboring cell information of HeNB 2 and HeNB 3 which are located in proximity. By way of example, HeNB 1 collects neighboring cell information of HeNB 2 of cell # 702, and HeNB 3 of cell # 703, which overlap with its own cell # 701.

By means of message generation section 102, HeNB 1 sends to monitoring apparatus 200 a message including the neighboring cell information of HeNB 2 and HeNB 3 (i.e., an NR report message)

Having referenced the database information at service continuation determination section 205, monitoring apparatus 200 determines that installation is taking place in area A where installation is permitted.

By means of message generation section 206, monitoring apparatus 200 sends to HeNB 1 a message permitting installation (i.e., an NR report response message).

Thus, HeNB 1 starts service.

Next, a case where installation is not permitted is described using FIG. 8.

According to FIG. 8, upon moving from area A #750, where installation is permitted, to area B #751, where installation is not permitted, HeNB 1 collects, at neighboring cell information collection function section 101, neighboring cell information of HeNB 4 which is located in proximity. By way of example, HeNB 1 collects neighboring cell information of HeNB 4 of cell # 704, which overlaps with its own cell # 701.

By means of message generation section 102, HeNB 1 sends to monitoring apparatus 200 a message including the neighboring cell information of HeNB 4 (i.e., an NR report message).

Having referenced the database information at service continuation determination section 205, monitoring apparatus 200 determines that installation is taking place in area B where installation is not permitted.

By means of message generation section 206, monitoring apparatus 200 sends to HeNB 1 a message not permitting installation (i.e., a service suspension instruction).

Thus, HeNB 1 suspends service.

In FIG. 7 and FIG. 8, HeNB 1 collects and sends neighboring cell information of other HeNBs. However, the present invention is by no means limited as such, and may collect and send neighboring cell information of macro cells that exist in proximity to HeNB 1.

Thus, with the present embodiment, database information identifying whether permission to install small cells can or cannot be granted is generated and stored by a monitoring apparatus. Thus, with the present embodiment, installation locations of small cells can be controlled flexibly, while at the same time preventing service suspension in the event of a cell addition, and/or the like.

With the present embodiment, installation locations of small cells are managed using database information in which locations of small cells are mapped to map information. Thus, the operator is able to manage installation locations of small cells in terms of absolute locations.

The disclosure of the specification, drawings, and abstract included in Japanese Patent Application No. 2010-292728, filed on December 28, 2010, is incorporated herein by reference in its entirety.

### Industrial Applicability

A monitoring apparatus and installation location management method for small cells according to the present invention are particularly for restricting installation locations of mobile small cells in particular.

### Reference Signs List

- 200: Monitoring apparatus
- 201: Message reception section
- 202: Message analysis section
- 203: Database generation section
- 204: Database management section
- 205: Service continuation determination section
- 206: Message generation section

## Claims

1. A monitoring apparatus that manages an installation location of a mobile small cell base station, the monitoring apparatus comprising:
an acquisition section that acquires neighboring cell information from a small cell base station subject to management, the neighboring cell information indicating small cell base stations located in proximity to the small cell base station subject to management;
a storage section that stores database information in which map information is divided into a plurality of areas, and in which whether or not installation is permitted for each small cell base station is identified for each area; and
a permission section that grants permission for installation with respect to the small cell base station subject to management if an installation location of the small cell base station subject to management as performed a determination based on the neighboring cell information acquired by the acquisition section is in the area where installation is permitted as identified in the database information with respect to the small cell base station subject to management.

2. The monitoring apparatus according to claim 1, wherein the database information stored in the storage section makes the areas larger in proportion to how wide a permissible moving range for the small cell base station is.

3. The monitoring apparatus according to claim 1, wherein:
the database information stored in the storage section maps installation locations of small cell base stations to the map information; and
the permission section makes the determination by comparing the small cell base stations located in proximity with the installation locations of the small cell base stations mapped to the map information.

4. A small cell installation location management method for a monitoring apparatus that manages an installation location of a mobile small cell base station, the small cell installation location management method comprising;
acquiring neighboring cell information from a small cell base station subject to management, the neighboring cell information indicating cells located in proximity to the small cell base station subject to management;
storing database information in which map information is divided into a plurality of areas, and in which whether or not installation is permitted for each small cell base station is identified for each area; and
permitting installation with respect to the small cell base station subject to management if an installation location of the small cell base station subject to management as determined based on the acquired neighboring cell information is in the area where installation is permitted as identified in the database information with respect to the small cell base station subject to management.
